Europäisches Patentamt

European Patent Office

Office européen des brevets

(11) Publication number: **0 135 626
B1**

(12) **EUROPEAN PATENT SPECIFICATION**

(45) Date of publication of patent specification: **17.02.88**

(21) Application number: **83305692.2**

(22) Date of filing: **23.09.83**

(51) Int. Cl.⁴: **B 21 D 39/06,** F 16 L 41/08, F 01 N 7/18

(54) **Method of securing a tube within an aperture.**

(43) Date of publication of application:
**03.04.85 Bulletin 85/14**

(45) Publication of the grant of the patent:
**17.02.88 Bulletin 88/07**

(84) Designated Contracting States:
**AT BE CH DE FR GB IT LI NL SE**

(56) References cited:
**FR-A-1 564 563
US-A-4 192 531**

(73) Proprietor: **Thorpe, Denis
Flat 1, No. 1 Mana Avenue
Titahi Bay, Wellington (NZ)**

(72) Inventor: **Thorpe, Denis
Flat 1, No. 1 Mana Avenue
Titahi Bay, Wellington (NZ)**

(74) Representative: **Godwin, Edgar James et al
MARKS & CLERK 57-60 Lincoln's Inn Fields
London, WC2A 3LS (GB)**

Courier Press, Leamington Spa, England.

## Description

This invention relates to a locking member in the form of a collar which can provide a strong mechanical joint between a tube and an apertured plate.

The present invention will be hereinafter described particularly with regard to its application in the construction of muffler assemblies for car silencers. It is, however, to be appreciated that this application is given by way of example only and that numerous other applications are possible and will be readily apparent to those skilled in the Engineering arts.

To the present time, the construction of muffler assemblies for vehicle silencers has usually required extensive welding between the various components thereof and particularly between the tubes and the baffles. This welding is time consuming and tends to assist in the development of corrosion around the weld points. It also tends to result in time in the failure of a percentage of the welds requiring the replacement of the entire silencer. Also, to facilitate such welding, the baffles have in the past been generally provided with flanges around the apertures to which the tubes are then inserted. This flange formation also increases the number of operations in the construction of a welded muffler assembly and hence the end cost thereof.

A proposal has now been put forward which allows a non-welded construction in which muffler tubes are expanded to form a ridge on each side of the baffle or end cap collar aperture to hold the muffler tubes to those parts. However, this proposal still requires the baffle or end cap apertures to be extruded or flanged with the resultant need for accurate preassembly before the muffler tube is expanded to form the resultant joint. Also, because the muffler tube is not expanded inside the flange area the baffle will only be as tight as the original, slide, fit.

The present invention has been developed specifically for use in the construction of mufflers but as it will be appreciated hereinafter it could be utilized in numerous other applications and wherever a mechanical joint between a tube and a plate is required.

It is thus an object of the present invention to provide a method and means whereby a strong mechanical joint between a tube and a plate can be obtained.

Summary of the invention

According to one aspect of the present invention there is thus provided a method of securing a tube (5) within an aperture in a plate (6), said method comprising:

(a) Providing a collar (1), including a side wall (3), having a peripheral inwardly directed first flange portion (4) at one end thereof, and a peripheral outwardly extending flange portion (2) at the opposite end thereof;

(b) Introducing said collar (1) onto a free end of the tube (5) so that the first flange portion (4) seats on and overlaps said free end;

(c) Introducing said free end of said tube (5) and said collar (1) into and through said aperture in said plate (6) so that said second flange portion (2) seats behind the rim of said aperture;

(d) Applying a force into said tube (5) to deform said collar (1) and to expand said free end so that said deformed collar (1) is secured both to said expanded free end (5A) and the material of said plate (6) about said aperture to form a mechanical joint between said tube (5) and said plate (6).

According to a second aspect of the present invention there is also provided a muffler (30) including: a baffle plate (6) having at least one aperture; at least one muffler tube (5) extending into the aperture in the baffle plate (6); and a locking collar (1) formed separately from both the baffle plate (6) and the muffler tube (5), and connecting the muffler tube (5) to the baffle plate (6); the locking collar (1) including a side wall (3) of substantially circular cross section located between the plate (6) and the tube (5), a first flange (4) extending inwardly from one end of the side wall (3), deformed over an expanded first end (5A) of the tube (5), and capturing the first end (5A) of the tube (5) between the side wall (3) and the first flange (4) thereby to mechanically join the tube to the locking collar, and a second flange (2) extending outwardly at the opposite end of the side wall (3), seating against the plate (6), and capturing the plate (6) between the second flange (2) and the side wall (3) thereby to mechanically join the plate (6) to the locking collar (1) and preventing axial movement of the muffler tube (5) relative to the baffle plate (6).

Brief description of the drawings

The present invention will now be described by way of example and with reference to the accompanying drawings wherein;

Figures 1 and 1A: show, diagramatically, respective plan perspective and cross-sectional views of a locking member according to one embodiment of the invention;

Figures 2A and 2B: show, diagramatically, cross-sectional views through a tube, collar and plate assembly both prior and after physical jointing there between has been obtained;

Figure 3 shows, diagramatically, a muffler sub-assembly utilizing the present invention;

Figure 4: shows, diagramatically, an hydraulic press assembly suitable for carrying out the manufacture of the muffler assembly of Figure 3.

Figure 5: shows, diagramatically, a cross-sectional view of a muffler utilizing the present invention.

Brief description of the preferred embodiments

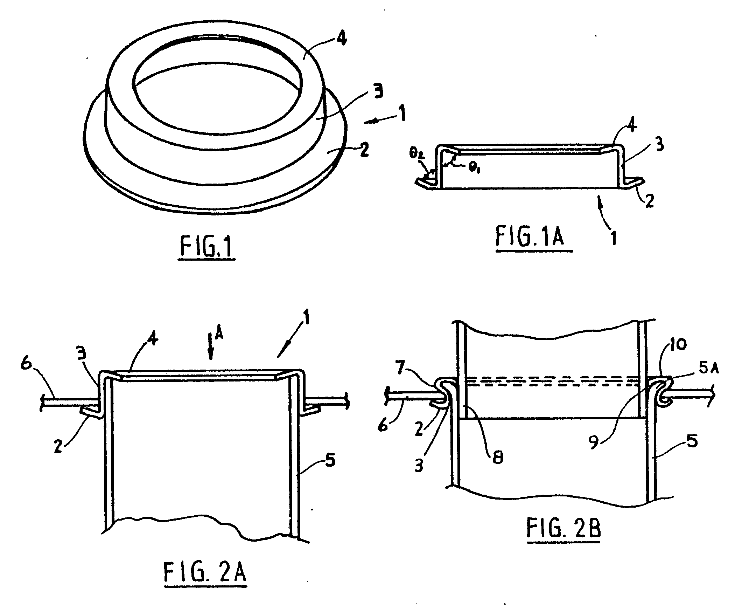

Referring to Figure 1 of the accompanying drawings a locking collar 1 according to one embodiment of the invention has a substantially circular side wall portion 3 with at one end a peripheral inwardly directed flange portion 4 and at an opposite end a peripheral outwardly directed flange portion 2.

The collar 1 when used in the construction of muffler assemblies would generally be a noncorrosive metal e.g. stainless steel, of suitable gauge e.g. 1 mm or 1.2 mm (20 or 18 bg). Alternatively, it could be of mild steel coated so as to protect against corrosion or plain mild steel but it should be of the same material or have the same coating as the other components to avoid setting up electrolytic action.

The inner and outer flanges 4 and 2 are each shown having an included angle $\theta_1$ and $\theta_2$ which is other than a right angle and may suitably be of the order of 70 degrees.

In Figure 2A the collar 1 is shown positioned at the free end of a tube 5 which has then been inserted into an aperture in a plate 6. The flange 2 is shown positioned behind the underside of the plate 6 about the aperture therein, with the flange 4 seating on and extending over the free end of the tube 5.

Axial pressure by means of a suitable mandrel or other such member inserted into the end of the tube 5 in a direction indicated by arrow A is then applied. This will result in a desired physical joint between the tube 5 and the plate 6 being formed. Thus in Figure 2B it will be seen that the axial pressure has resulted in the bell-mouthing or expanding of the tube free end 5A. At the same time the flange 4 has been forced inwardly to form a rim 10 which conforms with and grips the bell-mouthed tube end 5A. The side wall 3 is also shown conforming with the exterior surface of the tube end 5A before reaching the lower flange 2. The plate material around the plate aperture is thus trapped between the side wall 3 and the lower flange 2.

In this way, a strong mechanical joint is formed between the tube 5 and the plate 6 with the deformation of the tube end 5A of the collar 1.

The provision of the included angle $\theta_1$ defined by the flange 4 with the side wall 3 provides a lead-in for the tube 8. The included angle $\theta_2$ defined by the outer flange 2 is however believed to contribute to the resulting joint obtained as described below.

As the collar 1 is a "drawn" part there is inevitably a radius of a minimum of metal thickness between the flange 2 and the inner side of the wall 3. The bend in the flange 2 effectively lowers the reaction point against the tube 5 and prevents "twisting" of the collar 1 as the axial force A is applied. Without the provision of the bend in the flange 2 it is envisaged that the collar 1 could twist around the edge of the aperture in the plate 6. This could provide an inferior joint at least in its appearance. As shown in Figure 2B the edge 9 of rim 10 formed by the deformed flange 4, will clear a tube 8 inserted into the tube 5 after the joint has been formed, the deformation of the tube 5 at its free end region 5A providing a lead-in for the tube 8.

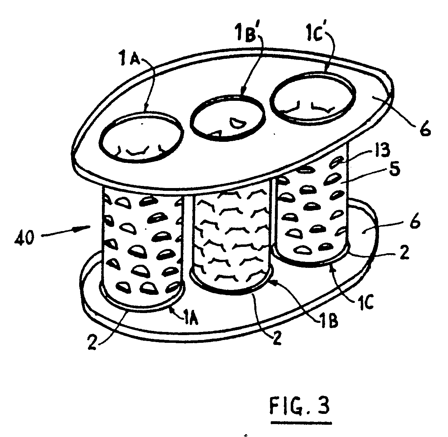

In Figure 3, the present invention as described broadly in Figures 1 and 2 is shown applied to the formation of a muffler-assembly 40. In Figure 3 the baffle plates 6 have respective muffler tubes 5 secured thereto and there between at their respective ends by locking collars 1A, 1B, 1C and 1A', 1B' and 1C'.

Such muffler sub-assemblies 40 can then be connected to the end caps as required, either utilizing end connectors to form the desired length of silencer or by adjusting inlet and/or outlet tube lengths and diameters to mate with the assembly. The sub-assembly 40 is a tight push-fit into the outer case of barrel so that no welding is necessary.

The tubes 5 along their respective lengths are shown provided with a plurality of exhaust gas apertures or louvres 13 in known manner.

To construct the sub-assembly 40 the tubes 5 will have mounted at each end respective collars 1 and the collars 1 plus tube ends will then be inserted into respective apertures in the baffle plates 6. A pressing operation will then be effected whereby the mechanical joints such as illustrated in Figure 2B will be formed between the tube ends and the baffle plates 6 by means of the respective collars 1 simultaneously.

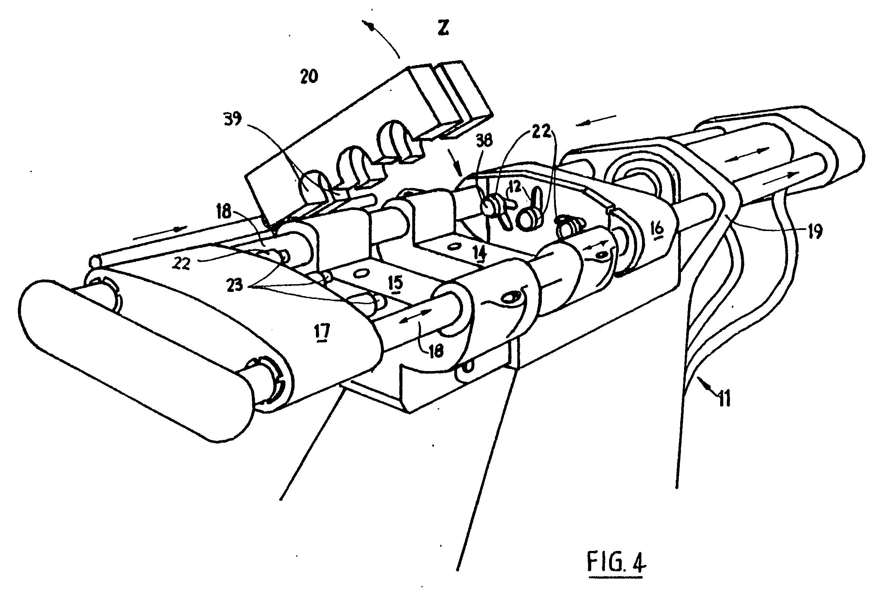

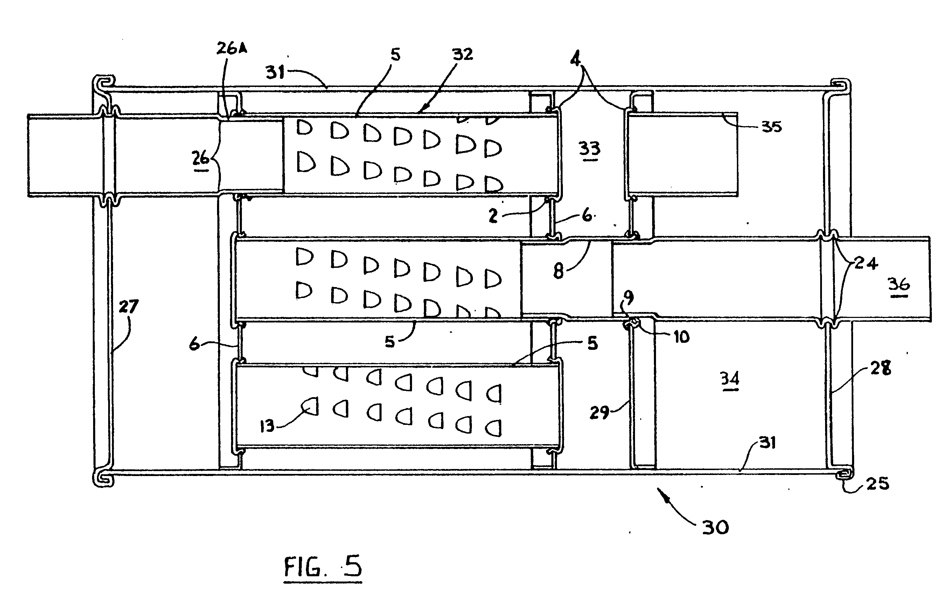

In Figure 4, a press assembly is indicated generally by arrow 11 which could be used for forming a muffler sub-assembly such as illustrated in Figure 3 or the complete muffler shown in Figure 5 hereinafter described.

The press 11 is shown including lower anvils 14 and 15 on which a sub-assembly such as shown in Figure 3 can be positioned prior to the mechanical joints therein being formed. An upper anvil 20 is movable in a vertical plane as illustrated by arrow Z so as to close over the lower anvils 14 and 15. The anvil 20 is shown provided with recesses 39 so as to accommodate the curvature of the respective tubes 5. The closing of the anvil 20 over the sub-assembly 40 can activate the press sequence wherein anvil 14 can move away from anvil 15 by a small predetermined distance, for example 12.7 mm (0.5"), and can then be locked, in a position whereby the flanges 2 of the collars 1 are supported avoiding compressive stress on the tubes 5.

A ram 16 can then move towards the anvil 20 until the mandrels 38 engage with the respective collars 1 mounted on the ends of the tubes 5 and to cause axial pressure to be exerted thereon thus forming the joints between the tubes 5 and the baffles 6. Spring loaded collars 22 about the respective mandrels 38 can assist in maintaining the collars, tubes and baffle plate in the desired disposition relative one with the other as the joints are formed. The resistance offered by the baffle sub-assembly can then cause pressure to be exerted on the bars 18 resulting in the closure of the distance between the end member 17 and the anvil 15. Pressure can continue to be exerted on the baffle sub-assembly until its component parts have been physically joined together when the ram 16 can return to a stop on an end member 19. The bars 18 can then push the end member 17 away and a spring (not shown) which can be provided under the ram 16 can operate the anvil 14 to retract it back towards the anvil 15 by the aforementioned distance it first moved away. The top anvil 20 can then automatically lift up and the finished muffler sub-assembly removed. The total time taken may be of the order of 30 seconds.

The mandrels 23 adjacent the end member 17 are also shown provided with spring loaded collars 22 for the aforementioned purpose.

The mandrels 22 and 23 are also each shown provided in the respective end members of the press with slots 12 which can enable vertical and horizontal adjustment of the mandrels prior to locking so as to accommodate various locations of apertures in the baffle plates of the sub-assembly.

Additionally, various adjustments can be made to accommodate required lengths of sub-assemblies 40 which may be required to be formed.

If the jointing of the tubes 5 to a single baffle plate 6 only were required then the bars 18 could be locked relative to the anvil 15 in which case only the ram 16 would be operable.

It is to be appreciated that the press assembly shown in Figure 4 is by way of a very diagrammatic illustration only of a type of press suitable for achieving the desired mechanical joints in a muffler or other required assembly or sub-assembly.

It will also be appreciated, however, that by utilizing the present invention a plurality of tubes 5 can be inserted into and locked with an apertured plate 6 at one or both ends thus avoiding individual insertion and welding as used to the present time. Also the use of extruded or flanged apertures in the baffle plate are no longer required. Moreover, the resulting mechanical joints are believed to be more rigid and superior to welded joints and furthermore avoid corrosion around the joints due to material deterioration caused firstly by swaging and then by welding.

Referring now to Figure 5 of the accompanying drawings a complete muffler assembly is illustrated in cross-section and referenced generally by arrow 30.

The muffler 30 is shown having a barrel 31 with respective end caps 27 and 28 secured thereto. The inlet tube 26 is shown extending through and secured to an end cap 27 and with a reduced diameter portion 26A extending into the muffler sub-assembly 32 and more particularly into one of the louvred tubes 5 thereof. Each of the tubes 5 of the sub-assembly 32 are shown jointed at each end with the respective apertured baffle plates 6 by means of respective collars 1.

Similarly, plate 29 defines with one of the baffle plates 6 and an end cap 28 respectively a reversing chamber 33 and a Helmholtz chamber 34. A tuning tube 35 is shown extending through and connected with the plate 29 by means of a collar 1. The exhaust gas exiting from the sub-assembly 32 through exhaust tube 36. The inlet and outlet tubes 26 and 36 are shown connected with the respective end caps 27 and 28 by a non-crimping technique forming joints 24 whilst the end caps 27 and 28 are shown respectively connected with the barrel 31 by means of lock seamed rolled joints 25, no welding being required in this whole assembly.

The various rigidly locked and accurately aligned but rapidly built sub-assemblies can become the building blocks of a highly efficient modular manufacturing concept. The resultant product is completely weld free to the stage shown in Figure 5. Welding may be required for attachments only, for example extension pipes or brackets.

## Claims

1. A method of securing a tube (5) within an aperture in a plate (6), said method comprising:

(a) Providing a collar (1), including a side wall (3), having a peripheral inwardly directed first flange portion (4) at one end thereof, and a peripheral outwardly extending flange portion (2) at the opposite end thereof;

(b) Introducing said collar (1) onto a free end of the tube (5) so that the first flange portion (4) seats on and overlaps said free end;

(c) Introducing said free end of said tube (5) and said collar (1) into and through said aperture in said plate (6) so that said second flange portion (2) seats behind the rim of said aperture;

(d) Applying a force into said tube (5) to deform said collar (1) and to expand said free end so that said deformed collar (1) is secured both to said expanded free end (5A) and the material of said plate (6) about said aperture to form a mechanical joint between said tube (5) and said plate (6).

2. A method as claimed in claim 1 further comprising providing an included angle $(\theta_1, \theta_2)$ less than 90 degrees respectively between each of said flange portions (4, 2) and said side wall (3).

3. A method as claimed in claim 1 further comprising providing a plurality of said tubes (5) and one of said collars (1) for each end of said tubes (5), and further providing a pair of plates (6) each having a plurality of said apertures to respectively accommodate one of said tube ends.

4. A method as claimed in Claim 3 wherein each of said tubes (5) is a muffler tube and each of said plates (6) is a baffle plate, said method forming a muffler sub-assembly (40).

5. A muffler (30) including: a baffle plate (6) having at least one aperture; at least one muffler tube (5) extending into the aperture in the baffle plate (6); and a locking collar (1) formed separately from both the baffle plate (6) and the muffler tube (5), and connecting the muffler tube (5) to the baffle plate (6), the locking collar (1) including a side wall (3) of substantially circular cross section located between the plate (6) and the tube (5), a first flange (4) extending inwardly from one end of the side wall (3), deformed over an expanded first end (5A) of the tube (5), and capturing the first end (5A) of the tube (5) between the side wall (3) and the first flange (4) thereby to mechanically join the tube to the locking collar, and a second flange (2) extending outwardly at the opposite end of the side wall (3), seating against the plate (6), and capturing the plate (6) between the second flange (2) and the side wall (3) thereby to mechanically join the plate (6) to the locking collar (1) and preventing axial movement of the muffler tube (5) relative to the baffle plate (6).

6. A muffler (30) according to Claim 5 wherein said first and second flanges (4, 2) each define an included angle ($\theta_1$, $\theta_2$) with said side wall (3) which is less than a right angle.

7. A muffler (30) according to Claim 6 wherein said included angles ($\theta_1$, $\theta_2$) are each substantially 70 degrees.

## Patentansprüche

1. Verfahren zur Fixierung eines Rohres (5) in einer Öffnung einer Platte (6), wobei

(a) eine Manschette (1) vorgesehen wird, welche eine Seitenwand (3) mit einem über ihren Umfang verlaufenden, nach innen gerichteten ersten Flanschteil (4) und einem über ihren Umfang verlaufenden, nach außen gerichteten Flanschteil (2) an ihrem gegenüberliegenden Rand umfaßt;

(b) diese Manschette (1) auf ein freies Ende des Rohres (5) so aufgebracht wird, daß der erste Flanschteil (4) auf diesem aufsitzt und es übergreift;

(c) das freie Ende des Rohres (5) und die Manschette (1) in und durch die Öffnung in der Platte (6) geführt werden, sodaß der zweite Flanschteil (2) hinter dem Rand der Öffnung anliegt;

(d) eine Kraft in das Rohr (5) eingebracht wird, um die Manschette (1) zu verformen und das freie Ende des Rohres aufzuweiten, sodaß die verformte Manschette (1) sowohl am ausgeweiteten freien Ende (5A) als auch am die Öffnung umgebenden Material der Platte (6) festliegt und eine mechanische Verbindung zwischen Rohr (5) und Platte (6) bildet.

2. Verfahren nach Anspruch 1, wobei zwischen jedem der Flanschteile (4, 2) und der Seitenwand (3) ein eingeschlossener Winkel ($\theta_1$, $\theta_2$) von weniger als 90° vorgesehen wird.

3. Verfahren nach Anspruch 1, wobei eine Mehrzahl von Rohren (5) und eine Manschette (1) für jedes Ende dieser Rohre vorgesehen wird und weiterhin ein Paar von Platten (6) vorgesehen wird, von denen jede eine Mehrzahl von Öffnungen aufweist, um eines der Rohrenden aufzunehmen.

4. Verfahren nach Anspruch 3, wobei jedes der Rohre (5) ein Schalldämpferrohr ist und jede Platte (6) ein Prallblech, sodaß durch das Verfahren ein Teil (40) eines Schalldämpfers ensteht.

5. Ein Schalldämpfer (30) umfassend: ein Prallblech (6) mit wenigstens einer öffnung, wenigstens ein Schalldämpferrohr (5), das sich in die öffnung des Prallbleches (6) erstreckt und eine Verbindungsmanschette (1), welche gesondert vom Prallblech (6) und vom Schalldämpferrohr (5) hergestellt ist und das Schalldämpferrohr (5) mit dem Prallblech (6) verbindet, wobei die Verbindungsmanschette (1) eine Seitenwand (3) mit im wesentlichen kreisförmigen Querschnitt umfaßt, welche zwischen der Platte (6) und dem Rohr (5) angeordnet ist, sowie einen ersten Flansch (4), der sich von einem Ende der Seitenwand (3) nach innen erstreckt, über ein ausgeweitetes erstes Ende (5A) des Rohres (5) verformt ist und das erste Ende (5A) des Rohres (5) zwischen der Seitenwand (3) und dem ersten Flansch (4) zur mechanischen Verbindung von Rohr und Verbindungsmanschette umschließt, weiters einen zweiten Flansch (2), welcher sich am entgegengesetzten Ende der Seitenwand (3) nach außen erstreckt, an der Platte (6) anliegt und die Platte (6) zwischen dem zweiten Flansch (2) und der Seitenwand (3) einschließt, wodurch die Platte (6) mit der Manschette (1) verbunden und eine Axialbewegung zwischen Schalldämpferrohr (5) und Prallblech (6) verhindert ist.

6. Ein Schalldämpfer (30) nach Anspruch 5, wobei die ersten und zweiten Flansche (4, 2) mit der Seitenwand (3) jeweils einen Winkel ($\theta_1$, $\theta_2$) einschließen, welcher kleiner ist als ein rechter Winkel.

7. Ein Schalldämpfer (30) nach Anspruch 6, wobei die eingeschlossenen Winkel ($\theta_1$, $\theta_2$) jeweils im wesentlichen 70° betragen.

## Revendications

1. Procédé de fixation d'un tube (5) dans un trou d'une plaque (6), ledit procédé comprenant:

(a) La prévision d'un collier (1), comportant une paroi latérale (3), présentant une première partie de rebord périphérique (4) dirigée vers l'intérieur à une de ses extrémités, et une partie de bord périphérique (2) dirigée vers l'extérieur à son extrémité opposée;

(b) l'introduction dudit collier (1) sur une extrémité libre du tube (5) de façon que la première partie de rebord (4) prenne appui sur, et chevauche, ladite extrémité libre;

(c) l'introduction de ladite extrémité libre dudit tube (5) et ledit collier (1) à l'intérieur et au travers dudit trou de ladite plaque (6) de façon que ladite seconde partie de rebord (2) prenne appui derrière le rebord dudit trou;

(d) l'application d'une force à l'intérieur dudit tube (5) pour déformer ledit collier (1) et pour mandriner ladite extrémité libre de façon que ledit collier déformé (1) soit fixé à la fois à ladite extrémité libre mandrinée (5A) et à la matière de ladite plaque (6) autour dudit trou pour constituer un joint mécanique entre ledit tube (5) et ladite plaque (6).

2. Procédé selon la revendication 1 comprenant encore la prévision d'un angle ($\theta_1$, $\theta_2$) de moins de 90 degrés entre chacune desdites parties de rebord (4, 2) respectivement et ladite paroi latérale (3).

3. Procédé selon la revendication 1 comprenant encore la prévision d'une série desdits tubes (5) et de l'un desdits colliers (1) pour chaque extrémité desdits tubes (5), ainsi que de deux plaques (6) présentant chacune une série desdits trous pour recevoir respectivement l'une desdites extrémités de tube.

4. Procédé selon la revendication 3 dans lequel chacun desdits tubes (5) est un tube amortisseur de bruit et chacune desdites plaques (6) est une plaque de chicane, ledit procédé formant un sous-ensemble (40) d'un amortisseur de bruit.

5. Amortisseur de bruit (30) comportant: une plaque de chicane (6) présentant au moins un trou; au moins un tube amortisseur de bruit (5) pénétrant dans le trou de la plaque de chicane (6); et un collier de verrouillage (1) façonné séparément tant de la plaque de chicane (6) que du tube amortisseur de bruit (5), et reliant le tube amortisseur de bruit (5) à la plaque de chicane (6), le collier de verrouillage (1) comportant une paroi latérale (3) à section sensiblement circulaire située entre la plaque (6) et le tube (5), un premier rebord (4) s'étendant vers l'intérieur à partir d'une extrémité de la paroi latérale (3), déformé pardessus une première extrémité mandrinée (5A) du tube (5), et emprisonnant la première extrémité (5A) du tube (5) entre la paroi latérale (3) et le premier rebord (4) pour joindre par là mécaniquement le tube au collier de verrouillage, et un second rebord (2) s'étendant vers l'extérieur à l'extrémité opposée de la paroi latérale (3), prenant appui contre la plaque (6), et emprisonnant la plaque (6) entre le second rebord (2) et la paroi latérale (3) pour joindre par là mécaniquement la plaque (6) au collier de verrouillage (1) et empêcher un déplacement axial du tube amortisseur de bruit (5) par rapport à la plaque de chicane (6).

6. Amortisseur de bruit (30) selon la revendication 5 dans lequel lesdits premier et second rebords (4, 2) définissent chacun avec ladite paroi latérale (3) un angle ($\theta_1$, $\theta_2$) qui est inférieur à un angle droit.

7. Amortisseur de bruit (30) selon la revendication 6 dans lequel lesdits angles ($\theta_1$, $\theta_2$) sont chacun de l'ordre de 70 degrés.

0 135 626

FIG.1A

FIG.2B

FIG.1

FIG.2A

FIG. 3

FIG. 4

0 135 626

FIG. 5